# EUROPEAN PATENT APPLICATION

(11) **EP 4 640 999 A1**
(43) Date of publication of application: **29.10.2025**
(21) Application number: 23912956.2
(22) Date of filing: 28.12.2023
(51) Int. Cl.: F01P 11/02

(54) **COOLANT HEATING DEVICE FOR VEHICLE**

(30) Priority: 29.12.2022 KR 20220188447
(71) Applicant: INZICONTROLS CO., LTD., Siheung-si, Gyeonggi-do 15090 (KR)
(72) Inventor: KWON, Taek Man, Siheung-si Gyeonggi-do 15090 (KR)
(74) Representative: Prüfer & Partner mbB Patentanwälte · Rechtsanwälte
(86) International application number: PCT/KR2023/021780
(87) International publication number: WO 2024/144282

(57) **Abstract**

The present invention relates to a coolant heating device for a vehicle, which is configured to increase the area in which coolant is heated and to prevent the formation of air bubbles in the coolant, thereby enhancing the heating efficiency of the coolant. The coolant heating device includes: a housing having an inlet through which the coolant is introduced, an outlet through which the coolant is discharged, and an internal space in which the coolant is heated; a heating unit disposed inside the housing and having a heat-generating region formed on an outer circumferential surface thereof to heat the coolant within the housing; and a support unit having one side joined to the outer circumferential surface of the heating unit to fixedly support the heating unit inside the housing. The support unit separates a space in which the heating unit is disposed from a space for supplying power to the heating unit within the housing.

## Description

### [Cross-Reference to Related Application]

This application is a National Stage Entry of PCT International Application No. PCT/KR2023/021780, which was filed on December 28, 2023, and claims priority to Korean Patent Application No. 10-2022-0188447, filed on December 29, 2022, in the Korean Intellectual Property Office, the disclosure of which is incorporated herein by reference.

### [Technical Field]

The present invention relates to a coolant heating device for a vehicle, and more particularly, to a coolant heating device for a vehicle capable of increasing the heating effect of the coolant by enlarging the area where the coolant is heated and preventing the generation of air bubbles in the coolant.

### [Background Art]

In conventional internal combustion engine (ICE) vehicles using fossil fuels, heating for the vehicle cabin or other components is typically achieved by utilizing the heat generated from the engine as an energy source. However, in electric vehicles (EVs) or hydrogen vehicles (FCEVs), there is no power source that generates high-temperature heat like an internal combustion engine, making it difficult to implement heating using the same approach. Moreover, it is also challenging to establish a temperature control system that maintains the temperature of a battery or fuel cell within an appropriate range.

Accordingly, electric vehicles and hydrogen vehicles are equipped with additional heating means such as heat pumps or electric heaters to construct air-conditioning systems or temperature control systems for managing the temperature of batteries or fuel cells.

Electric heaters used in EVs or FCEVs typically adopt either an air heating type, in which air is directly heated to provide cabin heating or to increase the temperature of the battery (or fuel cell), or a water heating type, in which coolant is heated to achieve the same purposes via indirect heating. While the air heating type is advantageous in terms of responsiveness and control, the water heating type is more favorable in terms of energy efficiency. Therefore, for systems such as temperature control systems that require continuous operation over a certain period of time, the water heating type is generally more suitable.

One common type of electric heater used in such water heating systems is a sheath heater in which a metal-sheathed heating wire is embedded. The amount of heat generated by the sheath heater is proportional to the magnitude of the applied current, and it is capable of generating high temperatures in a relatively short period of time. As such, the sheath heater can quickly raise the coolant temperature to a target level.

### [Disclosure]

### [Technical Problem]

An object of the present invention is to provide a coolant heating device for a vehicle that has a structure capable of improving heat generation efficiency when heating coolant using a water heating method.

### [Technical Solution]

According to an embodiment of the present invention, a coolant heating device for a vehicle comprises: a housing having an inlet through which coolant is introduced, an outlet through which the coolant is discharged, and an internal space in which the coolant is heated; a heating unit disposed inside the housing and having a heat-generating region formed on an outer circumferential surface thereof to heat the coolant within the housing; and a support unit having one side joined to the outer circumferential surface of the heating unit to fixedly support the heating unit inside the housing, wherein the support unit separates a space in which the heating unit is disposed from a space for supplying power to the heating unit.

Preferably, the inlet extends into the internal space of the housing and is spaced apart from the heating unit by a predetermined distance so as to form a gap.

Preferably, the outlet is formed on one side of the housing such that air present in the housing may be discharged through the gap.

Preferably, a vortex-inducing portion is formed on an inner surface of the housing to induce a vortex flow of the coolant.

Preferably, the vortex-inducing portion protrudes inward from the inner surface of the housing.

Preferably, the heating unit is spaced apart from the inner surface of the housing by a predetermined distance.

Preferably, the heating unit comprises: a body portion having a hollow structure; and a heating sheet configured to surround the outer circumferential surface of the body portion, and having a heat-generating pattern and first and second electrode terminals connected to the heat-generating pattern and configured to receive power.

Preferably, the heating unit is disposed such that its entire outer circumferential surface is immersed in the coolant introduced into the housing.

Preferably, the heating unit is arranged such that the coolant introduced through the inlet flows into the hollow portion of the body portion.

Preferably, the coolant flows along an inner circumferential surface of the hollow body portion and then along an outer circumferential surface of the heating sheet formed on the body portion.

Preferably, the heat-generating pattern comprises a pattern arranged in a first direction with respect to the heating sheet or a pattern arranged in a second direction different from the first direction.

Preferably, the first and second electrode terminals are formed to face each other at a predetermined distance from an edge of the heating sheet.

Preferably, the first and second electrode terminals are formed in parallel on an imaginary straight line in the first direction or the second direction.

Preferably, the first and second electrode terminals are formed to face each other in a central region of the heating sheet.

Preferably, the heating sheet has a rectangular shape, and the first and second electrode terminals are formed to face each other in a corner region of the heating sheet.

Preferably, the heating sheet has a rectangular shape and is formed to cover the entire outer circumferential surface of the body portion, and the heat-generating pattern extends to corner regions of the heating sheet.

Preferably, the support unit includes a connection hole configured to expose the first and second electrode terminals when joined with the heating unit, and one end of the support unit around the connection hole is joined to the heating unit.

Preferably, a power electrode is connected to each of the first and second electrode terminals, and a fixing member configured to fix the power electrodes is disposed on the support unit.

Preferably, the heating unit is formed of a ceramic material.

According to another embodiment of the present invention, a coolant heating device for a vehicle comprises: a housing having an inlet through which coolant is introduced, an outlet through which the coolant is discharged, and an internal space in which the coolant is heated; a heating unit disposed inside the housing, having an inner circumferential surface and an outer circumferential surface, and having electrode terminals on the outer circumferential surface and heat-generating patterns connected to the electrode terminals and configured to receive power, the heat-generating patterns configured to heat the coolant flowing along the inner and outer circumferential surfaces; and a support unit having one side joined to the outer circumferential surface of the heating unit to fixedly support the heating unit inside the housing.

Preferably, the support unit includes a plate configured to partition the internal space of the housing, and the plate includes: a protruding portion protruding perpendicularly from one surface on an inner side of the plate and having a groove shape; and a connection hole formed in a bottom region of the protruding portion.

Preferably, the protruding portion includes a plurality of protruding shapes having gradually decreasing groove sizes in a direction toward the connection hole.

Preferably, a bonding portion is formed around an end of the connection hole and extends in one direction while being bent so as to be contactable with the outer circumferential surface of the heating unit.

Preferably, the heating unit includes the electrode terminals and a joining line configured to guide the joining with the support unit.

Preferably, the support unit is formed of stainless steel.

Preferably, the support unit has a thickness of 0.5 to 0.8 mm.

### [Advantageous effects]

According to the present invention, since the heat-generating pattern is formed over the entire outer circumferential surface of the heating unit, the area in which the coolant is heated can be increased as the coolant flows in contact with the heating unit.

In addition, according to the present invention, the coolant is first heated while flowing through the hollow interior of the heating unit and is secondarily heated while flowing along the outer circumferential surface of the heating unit, thereby enhancing the heating efficiency of the coolant.

Furthermore, according to the present invention, a gap is formed between one end of the heating unit and the inlet of the coolant, so that when the coolant is introduced, air present in the inlet can be discharged through the gap and the outlet. As a result, generation of air bubbles in the coolant can be prevented, and the heating efficiency of the coolant can be further improved.

### [Description of Drawings]

FIG. 1 is a perspective view schematically illustrating a coolant heating device for a vehicle according to an embodiment of the present invention.
FIG. 2 is an exploded perspective view illustrating the coolant heating device for a vehicle according to an embodiment of the present invention.
FIG. 3 is a cross-sectional view taken along line A-A' of the coolant heating device shown in FIG. 1.
FIG. 4 is a view illustrating a state in which a heating sheet is coupled to a heating unit according to an embodiment of the present invention.
FIG. 5 is a view illustrating a state before the heating unit and the support unit are coupled according to an embodiment of the present invention.
FIG. 6 is a view illustrating a state after the heating unit and the support unit are coupled according to an embodiment of the present invention.
FIG. 7 is a view illustrating the heating sheet according to an embodiment of the present invention.
FIGS. 8a to 8d are views illustrating the heating sheet according to another embodiment of the present invention.

### [Best Mode]

Hereinafter, a preferred embodiment of the coolant heating device for a vehicle according to the present invention will be described in detail with reference to the accompanying drawings.

**In** the drawings, the same reference numerals are used to denote the same elements, and repetitive descriptions and detailed explanations of well-known functions and configurations that may unnecessarily obscure the subject matter of the invention will be omitted.

The embodiments of the present invention are provided to fully convey the scope of the invention to those skilled in the art, and thus, the shapes and sizes of elements shown in the drawings may be exaggerated for clarity of description.

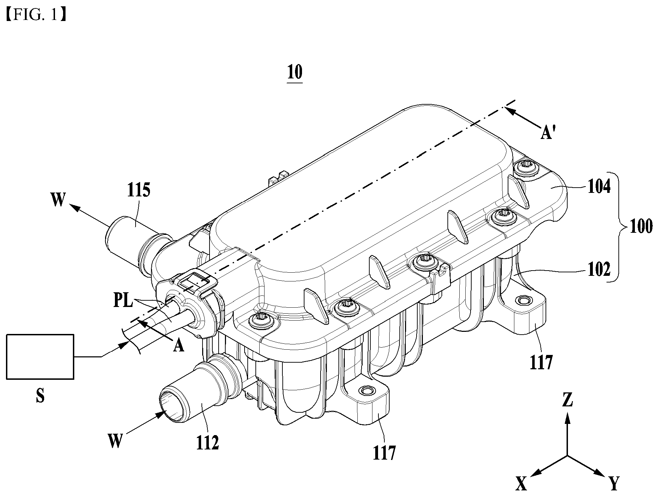

FIG. 1 is a perspective view schematically illustrating a coolant heating device for a vehicle according to an embodiment of the present invention.

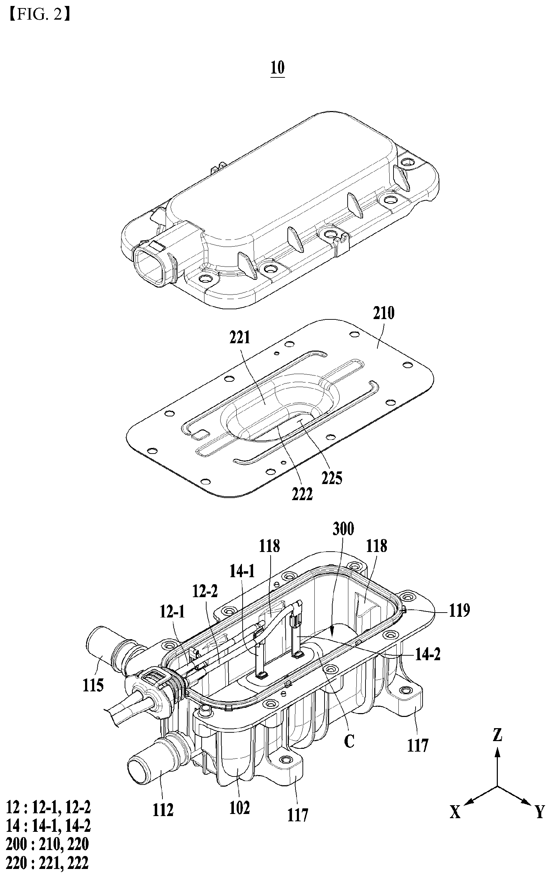

FIG. 2 is an exploded perspective view illustrating the coolant heating device for a vehicle according to an embodiment of the present invention.

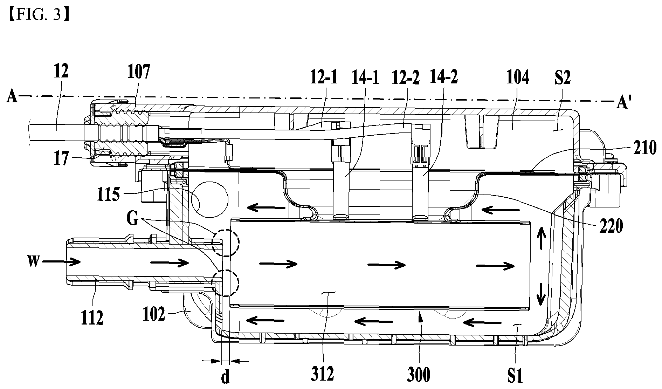

FIG. 3 is a cross-sectional view taken along line A-A' of the coolant heating device shown in FIG. 1.

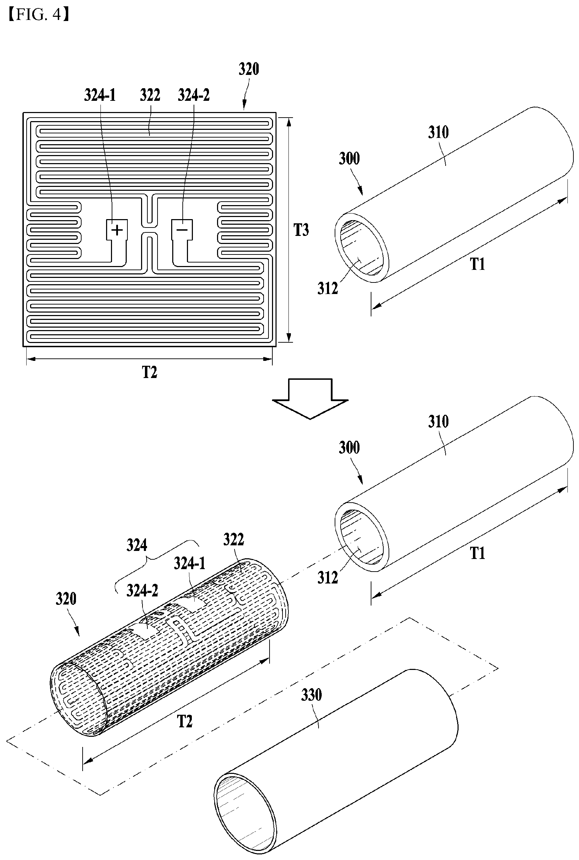

FIG. 4 is a view illustrating a state in which a heating sheet is coupled to a heating unit according to an embodiment of the present invention.

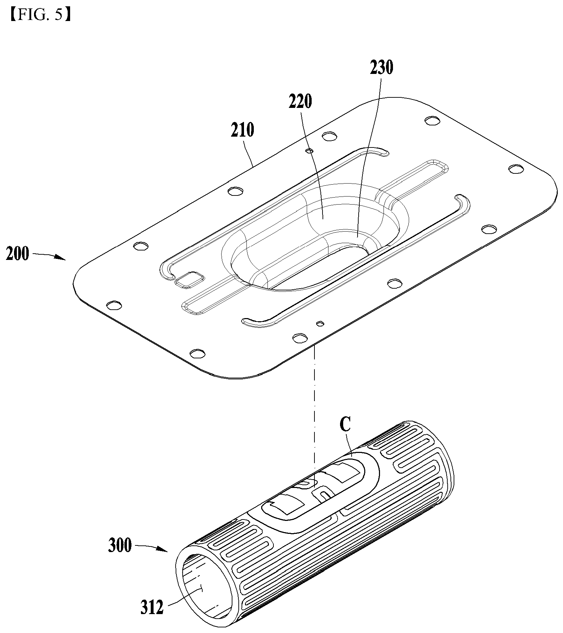

FIG. 5 is a view illustrating a state before the heating unit and the support unit are coupled according to an embodiment of the present invention.

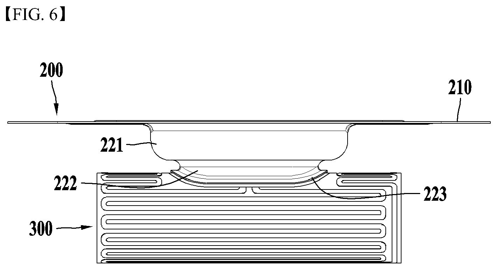

FIG. 6 is a view illustrating a state after the heating unit and the support unit are coupled according to an embodiment of the present invention.

Referring to FIGS. 1 to 3, a coolant heating device 10 for a vehicle according to an embodiment of the present invention includes a housing 100, a support unit 200, and a heating unit 300.

**In** the present invention, the coolant heating device 10 is illustrated and described as a type of warm-up heater that is applied to an electric vehicle without an engine and is configured to heat coolant (W) to a predetermined temperature. However, the invention is not limited thereto.

The housing 100 provides an internal space for containing the coolant (W), and includes a housing body 102 and a housing cover 104. The housing body 102 may be formed in a substantially hexahedral shape having an open side and a first internal space S1. The housing cover 104 may be formed in a substantially hexahedral shape having an open side and a second internal space S2, and may be coupled to the open side of the housing body 102 to cover it. When the housing body 102 and the housing cover 104 are coupled together, the first internal space S1 and the second internal space S2 may together form the entire internal space of the housing 100. As will be described later, the first internal space S1 and the second internal space S2 may be separated from each other by the support unit 200. The shapes of the housing body 102 and the housing cover 104 are not particularly limited.

An inlet 112 through which coolant (W) is introduced may be formed on one side of the housing body 102, and the inlet 112 may extend into the first internal space S1. An outlet 115 through which the heated coolant (W) is discharged from the internal space of the housing 100 may be formed on the opposite side of the housing body 102. As shown in FIG. 2, the inlet 112 is formed on one side surface of the housing 100 in the longitudinal direction (x-axis), and the outlet 115 is formed on the opposite side surface of the housing 100 in the width direction (y-axis). The inlet 112 and the outlet 115 may be formed adjacent to each other. However, the positions of the inlet 112 and the outlet 115 on the housing 100 are not limited.

A vortex-inducing portion 118 may be formed on the inner surface of the housing body 102 to induce a vortex flow of the coolant (W). As shown in FIG. 2, the vortex-inducing portion 118 may protrude inward from the inner surface of the housing 100 and may be formed in plural around the inner peripheral surface of the housing body 102 in the height direction (z-axis) of the housing 100. The vortex-inducing portion 118 may include an inclined surface to interfere with the flow direction of the coolant (W). However, the shape, number, and formation position of the vortex-inducing portion 118 are not particularly limited.

A fastening portion 117 may be formed on the outer surface of the housing body 102 to fasten the housing 100 to a vehicle. In this embodiment, the fastening portion 117 may be formed so that the longitudinal direction (x-axis) of the housing 100 is aligned parallel to the longitudinal direction of the vehicle.

The housing cover 104 may include an insertion portion 107 that allows a power line 12 to be routed from outside the housing 100 into the second internal space S2. The power line 12 includes a first power line 12-1 and a second power line 12-2, and may be connected to a connector 17, which is inserted into the insertion portion 107. The power line 12 may be connected to an external power supply S.

The support unit 200 supports the heating unit 300 such that the heating unit 300 maintains a fixed position within the internal space of the housing body 102. The support unit 200 may include a plate 210 and a protruding portion 220. The plate 210 may be brought into contact with and cover the open side of the housing body 102, and may be fastened to the housing body 102 using fastening means such as bolts. A sealing member 119 may be interposed between the plate 210 and the housing body 102 to prevent the coolant (W) contained in the first internal space S1 from leaking into the second internal space S2.

The protruding portion 220 may be formed on the plate 210. The protruding portion 220 may have a groove shape protruding perpendicularly from one surface on the inner side of the plate 210. A connection hole 225 may be formed in a bottom region of the protruding portion 220. Accordingly, when the support unit 200 and the heating unit 300 are joined, a region of the outer circumferential surface of the heating unit 300 confined within the connection hole 225 may be exposed to the outside of the plate 210.

Referring to FIGS. 2 and 4, the protruding portion 220 may include a first protruding portion 221 and a second protruding portion 222. The second protruding portion 222 may be formed to extend from the first protruding portion 221 and may have a groove space smaller than that of the first protruding portion 221. A connection hole 225 may be formed at an end of the second protruding portion 222. A bonding portion 223, which may be joined to the heating unit 300, may be formed around the connection hole 225. The bonding portion 223 may have a bent and extended shape around the connection hole 225.

However, in another embodiment of the present invention, the protruding portion 220 may have a groove shape formed by one or three or more protrusions extending around the connection hole 225, and there is no particular limitation on the size of the groove of the protruding portion 220, the size of the connection hole 225, or the number of the protruding portion 220 and the connection hole 225.

As shown in FIG. 3, a fixing member (not shown) for securing a power electrode 14 may be accommodated in the protruding portion 220.

The power electrode 14 is a component for supplying power to the heating unit 300, and may include a first power electrode 14-1 and a second power electrode 14-2. One end of the first and second power electrodes 14-1 and 14-2 may be connected to an outer circumferential surface of the heating unit 300, and the other end may be electrically connected to a first power line 12-1 and a second power line 12-2, respectively.

Meanwhile, the support unit 200 may be formed of a stainless steel material.

Referring to FIG. 4, the heating unit 300 is configured to heat coolant (W), and includes a body portion 310 and a heating sheet 320.

The body portion 310 may have a cylindrical shape with a hollow 312. However, the shape of the body portion 310 is not limited thereto, and may include, for example, a hexahedral shape having a hollow.

The body portion 310 may be formed of a ceramic material having excellent heat transfer and heat dissipation properties.

The heating sheet 320 is a component that generates heat when power is applied, and may have a substantially rectangular shape, although it is not limited thereto. The heating sheet 320 is configured to surround the outer circumferential surface of the body portion 310. One length T2 of the heating sheet 320 may be formed equal to the length T1 of the body portion 310, and the other length T3 may be formed equal to the outer diameter of the body portion 310. However, the invention is not limited thereto, and for example, the one length T2 of the heating sheet 320 may be shorter than the length T1 of the body portion 310, or the other length T3 may be shorter than the outer diameter of the body portion 310.

The heating sheet 320 may include electrode terminals 324 and a heat-generating pattern 322. The electrode terminals 324 may include a first electrode terminal 324-1 and a second electrode terminal 324-2. The heat-generating pattern 322 may be formed in various directions on the heating sheet 320. One end of the heat-generating pattern 322 may be connected to the first electrode terminal 324-1, and the other end may be connected to the second electrode terminal 324-2. The heat-generating pattern 322 may be formed over the entire area of the heating sheet 320 or may be formed over only a portion thereof.

According to an embodiment of the present invention, the surface of the heating sheet 320 on which the heat-generating pattern 322 is formed may be configured to face and surround the outer circumferential surface of the body portion 310. As a result, when the heating unit 300 is viewed from the outside, the heat-generating pattern 322 may not be visible.

In addition, according to an embodiment of the present invention, a cover unit 330 may be further provided to surround the heating unit 300, thereby preventing the heating unit 300 from being exposed externally.

Hereinafter, the first and second electrode terminals 324-1 and 324-2 and the heat-generating pattern 322 formed on the heating sheet 320 will be described in more detail.

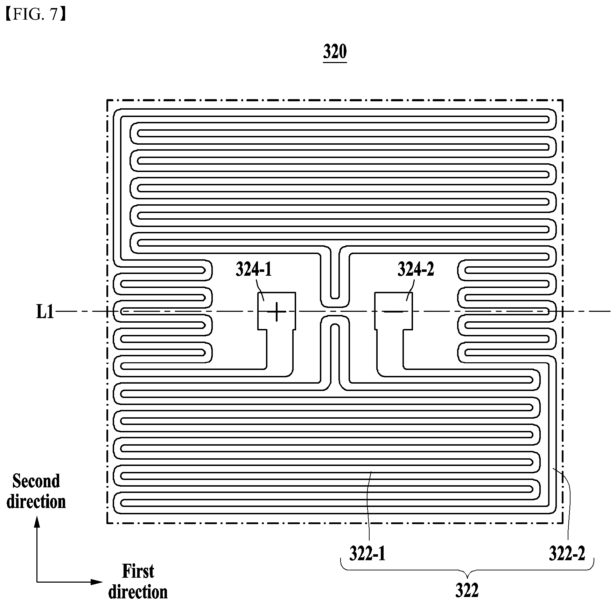

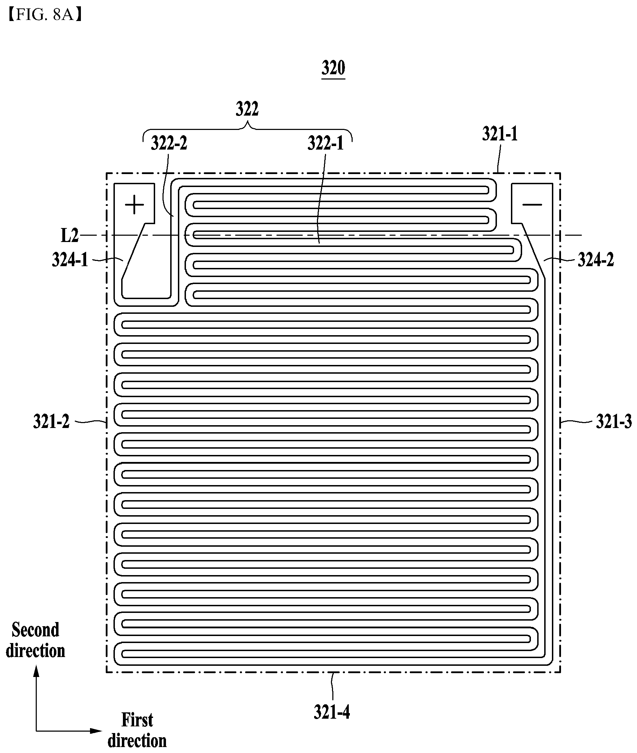

FIG. 7 is a view illustrating a heating sheet according to an embodiment of the present invention, and FIGS. 8a to 8d are views illustrating heating sheets according to other embodiments of the present invention.

In FIGS. 7 through 8d, a first direction and a second direction are described as being orthogonal to each other. However, the angle between the first direction and the second direction may vary.

In the present invention, the heat-generating pattern 322 extends between the first electrode terminal 324-1 and the second electrode terminal 324-2, and may include a repeating configuration in which heat-generating lines 322-1 arranged in the first direction and heat-generating lines 322-2 arranged in the second direction are connected to each other, thereby forming a variety of patterns.

Referring to FIG. 7, the first and second electrode terminals 324-1 and 324-2 according to an embodiment of the present invention are formed in a central region of the heating sheet 320. The first and second electrode terminals 324-1 and 324-2 are arranged in parallel along an imaginary straight line L1 formed in the first direction. However, the first and second electrode terminals 324-1 and 324-2 may be arranged in parallel along an imaginary straight line formed in the second direction, or along an imaginary straight line inclined at a predetermined angle with respect to the first or second direction.

In the embodiment shown in FIG. 7, the heat-generating pattern 322 has a repeating configuration in which heat-generating lines 322-1 arranged in the first direction extend to the vicinity of both edge ends of the heating sheet 320, are then bent, and again extend in the first direction, thereby forming a repeated pattern in the second direction. Accordingly, the length of the heat-generating lines 322-1 arranged in the first direction is greater than the length of the heat-generating lines 322-2 arranged in the second direction.

In another embodiment of the present invention illustrated in FIG. 8a, the first and second electrode terminals 324-1 and 324-2 are formed in corner regions of the heating sheet 320. Specifically, the first electrode terminal 324-1 is formed in a region where a first corner 321-1 and a second corner 321-2 meet, and the second electrode terminal 324-2 is formed in a region where a third corner 321-3 and a fourth corner 321-4 meet.

Here, the first and second electrode terminals 324-1 and 324-2 are arranged in parallel along an imaginary straight line L2 formed in the first direction. However, the first and second electrode terminals 324-1 and 324-2 may alternatively be formed in respective corner regions of the heating sheet 320 such that they face each other diagonally.

In another embodiment of the present invention illustrated in FIG. 8a, the heat-generating pattern 322 has a repeating configuration in which heat-generating lines 322-1 arranged generally in a first direction extend to the vicinity of both corners 321-2 and 321-3 of the heating sheet 320, are then bent, and again extend in the first direction. This configuration is repeated in the second direction. Accordingly, the length of the heat-generating lines 322-1 arranged in the first direction is greater than the length of the heat-generating lines 322-2 arranged in the second direction.

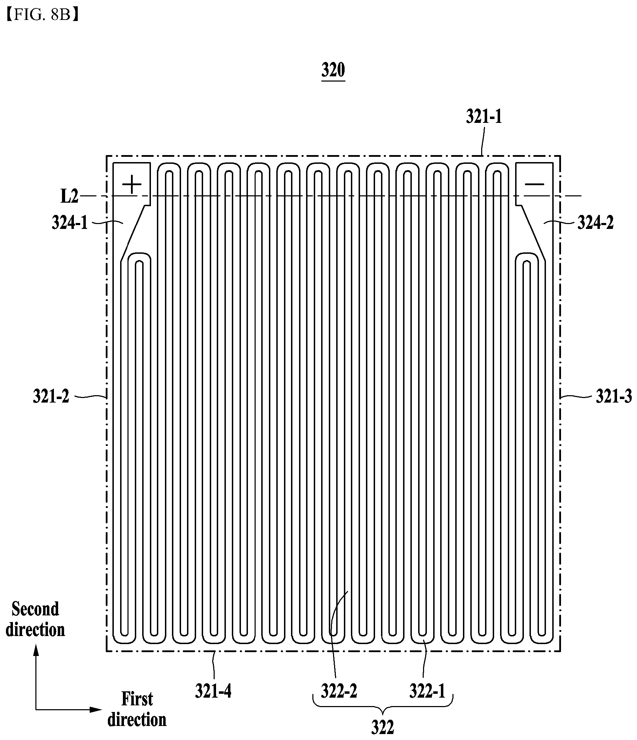

In another embodiment of the present invention illustrated in FIG. 8b, the first and second electrode terminals 324-1 and 324-2 are formed in corner regions of the heating sheet 320, as shown in the embodiment illustrated in FIG. 8b. However, in this embodiment, the heat-generating pattern 322 has a repeating configuration in which heat-generating lines 322-2 arranged generally in the second direction extend to the vicinity of both corners 321-1 and 321-4 of the heating sheet 320, are then bent, and again extend in the second direction. This configuration is repeated in the first direction. Accordingly, the length of the heat-generating lines 322-2 arranged in the second direction is greater than the length of the heat-generating lines 322-1 arranged in the first direction.

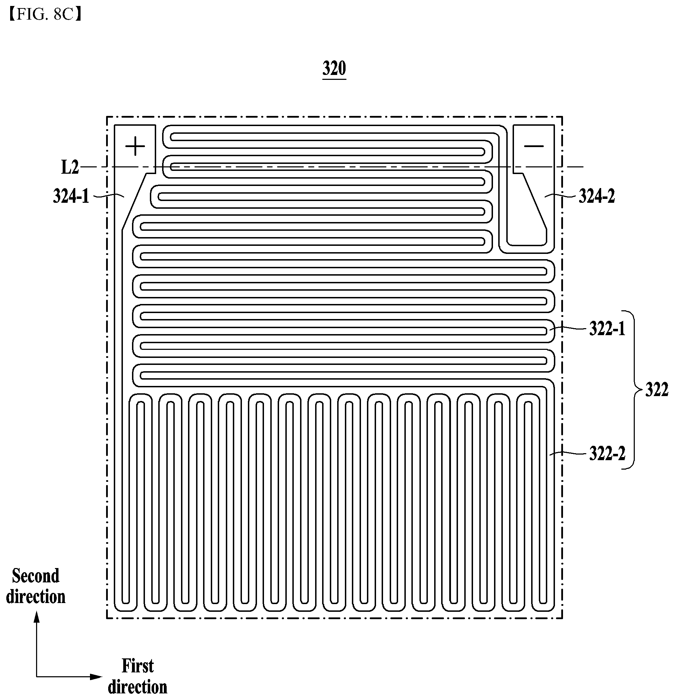

In another embodiment of the present invention illustrated in FIG. 8c, the first and second electrode terminals 324-1 and 324-2 are formed in corner regions of the heating sheet 320, as described in the embodiment illustrated in FIG. 8b. However, in this embodiment, the heat-generating pattern 322 includes a region in which heat-generating lines 322-1 arranged in the first direction extend to the vicinity of both corners 321-2 and 321-3 of the heating sheet 320, are then bent, and again extend in the first direction, with this configuration repeating in the second direction. In another region of the heating sheet 320, the heat-generating pattern 322 includes heat-generating lines 322-2 arranged in the second direction, which extend to the vicinity of both corners 321-1 and 321-4, are then bent, and again extend in the second direction, with this configuration repeating in the first direction.

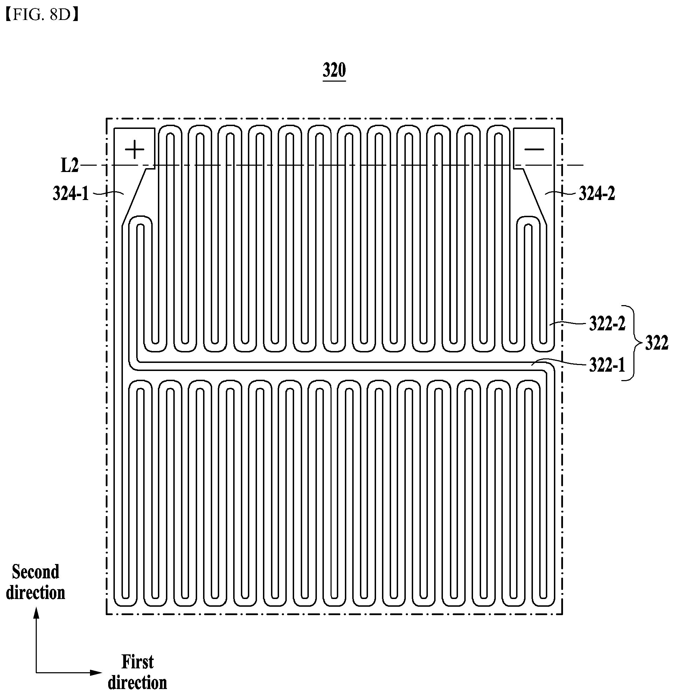

In another embodiment of the present invention illustrated in FIG. 8d, the first and second electrode terminals 324-1 and 324-2 are also formed in corner regions of the heating sheet 320, as described in the embodiment shown in FIG. 8b. However, in this embodiment, the heat-generating pattern 322 is located in a central region of the heating sheet 320 and includes heat-generating lines 322-1 arranged in the first direction that extend to the vicinity of both corners in that direction. Based on this center region, the heat-generating pattern further includes heat-generating lines 322-2 arranged in the second direction on both lateral sides. These heat-generating lines 322-2 extend to the vicinity of both corners 321-1 and 321-4, are then bent, and again extend in the second direction, with this configuration repeating in the first direction. In this embodiment, the length of the heat-generating lines 322-2 arranged in the second direction is greater than the length of the heat-generating lines 322-1 arranged in the first direction.

In the embodiment of the present invention, since the heat-generating pattern 322 is formed to extend to the corner regions of the heating sheet 320, the area that generates heat when power is supplied to the first and second electrode terminals 324-1 and 324-2 may include the entire area of the heating sheet 320.

Meanwhile, in another embodiment of the present invention, the first and second electrode terminals 324-1 and 324-2 may be formed at various positions spaced apart from the corners (edges), and may not be arranged in parallel along an imaginary straight line formed in the first direction or the second direction. That is, the first and second electrode terminals 324-1 and 324-2 may be formed at various positions on the heating sheet 320.

Referring again to FIGS. 5 and 6, a joining line C may be formed on the outer circumferential surface of the heating unit 300 to align the joining position between the heating unit 300 and the support unit 200. The joining line C may be formed on the body portion 310 or the heating sheet 320, and may be formed to include the first and second electrode terminals 324-1 and 324-2 within the interior of the joining line C. In an embodiment of the present invention in which the first and second electrode terminals 324-1 and 324-2 are formed in a central region of the heating sheet 320, the joining line C may also be formed in the central region of the heating sheet 320.

Specifically, a bonding portion 223 formed at the end of the second protruding portion 222 of the support unit 200 may be joined to the heating unit 300 by coming into contact with a joining line C and undergoing a brazing process or the like. As described above, since the support unit 200 is made of stainless steel and the heating unit 300 is made of ceramic, a difference in thermal expansion coefficients may cause the heating unit 300 to crack during the brazing process. To prevent such issues, it is preferable that the bonding portion 223 of the support unit 200, more precisely, the thickness of the bonding portion 223, is maintained within an appropriate range, for example, from 0.5 mm to 0.8 mm.

Meanwhile, the bonding portion 223 may have a shape corresponding to that of the joining line C to allow surface contact. For example, when the joining line C formed on the outer circumferential surface of the heating unit 300 includes a certain curvature, the bonding portion 223 may also include a curvature corresponding to that of the joining line C.

In the embodiments illustrated in FIGS. 8a to 8d, since the first and second electrode terminals 324-1 and 324-2 are formed in corner regions of the heating sheet 320, when the heating sheet 320 is formed to fully surround the outer circumferential surface of the body portion 310, the electrode terminals may be positioned near both longitudinal ends of the body portion 310. In this case, the bonding portion 223 of the support unit 200 may be formed longer than the bonding portion 223 illustrated in FIGS. 5 and 6 so as to include the first and second electrode terminals 324-1 and 324-2.

Meanwhile, when the heating unit 300 is joined to the support unit 200 and the support unit 200 is fastened to the housing body 102, the heating unit 300 may be disposed in the first internal space S1 of the housing body 102. The heating unit 300 may be arranged such that its longitudinal direction is parallel to the longitudinal direction of the housing 100, and one end thereof may be oriented toward the inlet 112. At this time, the hollow 312 of the heating unit 300 may be arranged to face a hole formed in the inlet 112. The hole of the hollow 312 may be formed larger than the hole of the inlet 112.

Further, since one end of the heating unit 300 is spaced apart from the inlet 112 by a predetermined distance d, a gap G may be formed between the one end of the heating unit 300 and the inlet 112. The gap G is configured to allow air bubbles remaining inside the housing 100 to be discharged through the gap G to the outlet 115. When the coolant W flows into the housing 100 through the inlet 112, air present in the inlet 112 may be discharged to the outlet 115 through the gap G before entering the hollow 312 of the heating unit 300.

The heating unit 300 may be arranged so as not to be in contact with an inner surface of the housing body 102. For example, the heating unit 300 may be spaced apart from the inner bottom surface and side surfaces of the housing body 102 so as not to make contact therewith.

Hereinafter, a process of heating coolant using the coolant heating device for a vehicle according to an embodiment of the present invention will be described.

When power is supplied from a power supply source S, current flows through the heat-generating pattern 322 via the first and second electrode terminals 324-1 and 324-2, thereby heating the outer circumferential surface of the heating unit 300. At this time, the heat generated in the heat-generating pattern 322 may be transferred to the inner circumferential surface of the hollow 312 of the heating unit 300.

The coolant W introduced through the inlet 112 may flow into the hollow 312 of the heating unit 300, during which a vortex may be generated. While the coolant W flows through the interior of the hollow 312, it may be subjected to a first-stage heating process. Thereafter, the coolant W that has passed through the hollow 312 may change direction upon reaching the inner surface of the housing body 102 and may flow along the outer circumferential surface of the heating unit 300. At this time, vortices may be formed at the vortex-inducing portion 118 formed on the housing body 102.

Subsequently, as the coolant W flows along the outer circumferential surface of the heating unit 300, it may undergo a second-stage heating process. The heating unit 300 may be immersed such that its entire structure is submerged in the coolant W. When the heat-generating pattern 322 is formed over the entire outer circumferential surface of the heating unit 300, the coolant W may be heated by the entire outer circumferential surface and/or the inner circumferential surface of the hollow 312 of the heating unit 300.

After being subjected to the first and second stages of heating by the heating unit 300, the heated coolant W may be discharged to the outside through the outlet 115.

While the present invention has been described with reference to an embodiment illustrated in the accompanying drawings, it is to be understood that such embodiment is provided merely by way of example. Various modifications, alterations, and equivalent embodiments may be made by those skilled in the art without departing from the scope of the invention. Therefore, the true scope of protection of the present invention shall be defined only by the appended claims.

## Claims

1. A coolant heating device for a vehicle, comprising:
a housing having an inlet through which coolant is introduced, an outlet through which the coolant is discharged, and an internal space in which the coolant is heated;
a heating unit disposed inside the housing and having a heat-generating region formed on an outer circumferential surface thereof to heat the coolant within the housing; and
a support unit having one side joined to the outer circumferential surface of the heating unit to fixedly support the heating unit inside the housing,
wherein the support unit separates a space in which the heating unit is disposed from a space for supplying power to the heating unit.

2. The coolant heating device of claim 1,
wherein the inlet extends into the internal space of the housing and is spaced apart from the heating unit by a predetermined distance to form a gap.

3. The coolant heating device of claim 2,
wherein the outlet is formed on one side of the housing so that air present in the housing can be discharged through the gap.

4. The coolant heating device of claim 1,
wherein a vortex guide portion is formed on an inner surface of the housing to induce a vortex flow of the coolant.

5. The coolant heating device of claim 4,
wherein the vortex guide portion protrudes toward the inner side of the housing.

6. The coolant heating device of claim 1,
wherein the heating unit is spaced apart from the inner surface of the housing by a predetermined distance.

7. The coolant heating device of claim 1,
wherein the heating unit comprises:
a body portion having a hollow structure; and
a heating sheet configured to surround the outer circumferential surface of the body portion, and having a heat-generating pattern and first and second electrode terminals connected to the heat-generating pattern and configured to receive power.

8. The coolant heating device of claim 7,
wherein the heating unit is disposed so that the entire outer circumferential surface thereof is immersed in the coolant introduced through the inlet.

9. The coolant heating device of claim 7,
wherein the heating unit is disposed such that the coolant introduced into the housing through the inlet flows into the hollow interior of the body portion.

10. The coolant heating device of claim 9,
wherein the coolant flows along the inner circumferential surface of the hollow of the body portion and then flows along the outer circumferential surface of the heating sheet formed on the body portion.

11. The coolant heating device of claim 7,
wherein the heat-generating pattern comprises a pattern arranged in a first direction with respect to the heating sheet or a pattern arranged in a second direction different from the first direction.

12. The coolant heating device of claim 7,
wherein the first and second electrode terminals are formed to face each other at a predetermined distance from an edge of the heating sheet.

13. The coolant heating device of claim 11,
wherein the first and second electrode terminals are formed in parallel on an imaginary straight line in the first direction or the second direction.

14. The coolant heating device of claim 7,
wherein the first and second electrode terminals are formed to face each other in a central region of the heating sheet.

15. The coolant heating device of claim 7,
wherein the heating sheet has a rectangular shape, and
the first and second electrode terminals are formed to face each other in a corner region of the heating sheet.

16. The coolant heating device of claim 7,
wherein the heating sheet has a rectangular shape, is formed to cover the entire outer circumferential surface of the body portion, and
the heat-generating pattern extends to corner regions of the heating sheet.

17. The coolant heating device of claim 7,
wherein the support unit includes a connection hole configured to expose the first and second electrode terminals when joined with the heating unit, and one end of the support unit around the connection hole is joined to the heating unit.

18. The coolant heating device of claim 16,
wherein a power electrode is connected to each of the first and second electrode terminals, and
a fixing member configured to fix the power electrode is disposed on the support unit.

19. The coolant heating device of claim 7,
wherein the heating unit is formed of a ceramic material.

20. A coolant heating device for a vehicle, comprising:
a housing having an inlet through which coolant is introduced, an outlet through which the coolant is discharged, and an internal space in which the coolant is heated;
a heating unit disposed inside the housing, having an inner circumferential surface and an outer circumferential surface, and having electrode terminals on the outer circumferential surface and heat-generating patterns connected to the electrode terminals and configured to receive power, the heat-generating patterns configured to heat the coolant flowing along the inner and outer circumferential surfaces; and
a support unit having one side joined to the outer circumferential surface of the heating unit to fixedly support the heating unit inside the housing.

21. The coolant heating device of claim 20,
wherein the support unit includes a plate configured to partition an internal space of the housing, and
the plate includes:
a protruding portion protruding perpendicularly from one surface on an inner side of the plate and having a groove shape; and
a connection hole formed in a bottom region of the protruding portion.

22. The coolant heating device of claim 21,
wherein the protruding portion includes a plurality of protruding shapes having gradually decreasing groove sizes in a direction toward the connection hole.

23. The coolant heating device of claim 21,
wherein a bonding portion is formed around an end of the connection hole and extends in one direction while being bent so as to be contactable with the outer circumferential surface of the heating unit.

24. The coolant heating device of claim 21,
wherein a bonding portion is formed around an end of the connection hole and extends in one direction while being bent so as to be contactable with the outer circumferential surface of the heating unit.

25. The coolant heating device of claim 20,
wherein the heating unit includes the electrode terminals and a joining line configured to guide the joining with the support unit.

26. The coolant heating device of claim 20,
wherein the support unit is formed of stainless steel.

27. The coolant heating device of claim 26,
wherein the support unit has a thickness of 0.5 to 0.8 mm.
